(19) Europäisches Patentamt / European Patent Office / Office européen des brevets

(11) **EP 3 806 344 A1**

(12) **EUROPEAN PATENT APPLICATION**
published in accordance with Art. 153(4) EPC

(43) Date of publication:
**14.04.2021 Bulletin 2021/15**

(21) Application number: **19822660.7**

(22) Date of filing: **20.06.2019**

(51) Int Cl.:
**H04B 7/0413** (2017.01)

(86) International application number:
**PCT/CN2019/092022**

(87) International publication number:
**WO 2019/242671 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2018 CN 201810652577**

(71) Applicant: **HUAWEI TECHNOLOGIES CO., LTD.**
**Shenzhen, Guangdong 518129 (CN)**

(72) Inventors:
• **YUAN, Fangchao**
  **Shenzhen, Guangdong 518129 (CN)**
• **CHEN, Peng**
  **Shenzhen, Guangdong 518129 (CN)**
• **YANG, Bo**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **CHANNEL ESTIMATION METHOD AND APPARATUS, AND COMMUNICATION SYSTEM**

(57) This application discloses a channel estimation method and apparatus, and a communications system, and pertains to the field of communications technologies. The method is applied to an AP, and includes: obtaining communication quality between the AP and a user terminal STA; determining, based on the communication quality, a quantity of channel estimations that need to be performed in a current round of time smooth channel estimation TSCE; and obtaining channel state information CSI between the AP and the STA, where the CSI is determined by a channel estimation device based on a channel estimation result obtained after the current round of TSCE is performed based on the determined quantity of channel estimations. In this application, the AP adjusts, in real time based on the communication quality, a quantity of channel estimations that need to be performed in each round of TSCE, to resolve a problem of relatively low reliability of channel estimation in a related technology.

FIG. 4

**Description**

This application claims priority to Chinese Patent Application No. 201810652577.9, filed on June 22, 2018, and entitled "CHANNEL ESTIMATION METHOD AND APPARATUS, AND COMMUNICATIONS SYSTEM", which is incorporated herein by reference in its entirety.

**TECHNICAL FIELD**

This application relates to the field of communications technologies, and in particular, to a channel estimation method and apparatus, and a communications system.

**BACKGROUND**

In a wireless local area network (Wireless Local Area Network, WLAN) that is usually referred to as a wireless fidelity (Wireless Fidelity, Wi-Fi) communications network, institute of electrical and electronics engineers (Institute of Electrical and Electronics Engineers, IEEE) 802.11 series standards are used. A WLAN system usually includes a distributed system, an access point (Access Point, AP), a wireless medium, and a user terminal (Station, STA). The distributed system is located in a backbone network (the Ethernet is usually used as a backbone network), and is used to forward data between APs. The wireless medium is a transmission path formed from a transmit end to a receive end, namely, a wireless channel. One end of the AP is connected to the distributed system by using a wired network, and the other end is connected to the STA by using a wireless network. The AP is configured to provide a bridge function between the wired network and the wireless network. The STA is a terminal device that has a wireless access function, such as a smartphone and a laptop.

In the WLAN, a time division multiple access (Time division multiple access, TDMA) mode and a carrier sense multiple access with collision avoidance (Carrier Sense Multiple Access with Collision Avoidance, CSMA/CA) channel access mechanism are used, and a throughput is greatly limited. Currently, a system channel capacity is usually increased by using a multiple input multiple output (Multiple Input Multiple Output, MIMO) technology, so as to adapt to high-speed data transmission in a wireless broadband environment. The MIMO technology is a technology in which a plurality of antennas are configured at a transmit end and/or a receive end, signals are sent and received by using different antennas, and the system channel capacity is improved by using a spatial multiplexing gain without increasing a frequency resource and antenna transmit power. A MIMO system can effectively suppress or eliminate common channel interference by using an adaptive beamforming technology or a multi-user detection technology. Theoretically, when there are N (N is a positive integer) antennas at the transmit end, the transmit end may simultaneously transmit, by using the N antennas, electromagnetic signals that do not interfere with each other to N receive ends. Space domain joint diversity and/or interference cancellation can be implemented by superposing the electromagnetic signals transmitted by using the N antennas. Currently, the theoretical analysis can be implemented by precoding. Precoding is implemented based on channel state information (Channel State Information, CSI), and the CSI is obtained by the receive end by performing channel estimation by using data transmitted between the receive end and the transmit end. Therefore, accuracy of channel estimation directly affects reliability of precoding, and further affects system performance of the entire WLAN.

In a related technology, a channel estimation method based on a training sequence is generally used to obtain the CSI. In this method, the transmit end needs to send known information (the training sequence) on all subcarriers of an orthogonal frequency division multiplexing (Orthogonal Frequency Division Multiplexing, OFDM) modulated signal, and the receive end estimates, based on a change of the known information, a frequency domain feature (including a signal amplitude and phase) of a subcarrier channel on which the training sequence is located. Currently, a commonly used training sequence-based channel estimation algorithm includes a least square (Least Square, LS) algorithm. However, a channel estimation method based on the LS algorithm is relatively sensitive to channel noise. When a signal-to-noise ratio of a channel is relatively low, a channel estimation error is relatively large. For example, when the LS algorithm is used to estimate a wireless channel in a Wi-Fi communications network having relatively large noise interference, reliability of channel estimation is relatively low.

**SUMMARY**

Embodiments of this application provide a channel estimation method and apparatus, and a communications system, to resolve a problem of relatively low reliability of channel estimation in a related technology. The technical solutions are as follows:

According to a first aspect, a channel estimation method is provided and applied to an AP, and the method includes:

obtaining communication quality between the AP and a user terminal STA;
determining, based on the communication quality, a quantity of channel estimations that need to be performed in a current round of time smooth channel estimation TSCE; and
obtaining channel state information CSI between the AP and the STA, where the CSI is determined by a channel estimation device based on a channel estimation result obtained after the current round of TSCE is performed based on the determined quantity of channel estimations.

It should be noted that according to the channel estimation method provided in this embodiment of this application, the AP determines, based on the communication quality, a quantity of channel estimations that need to be performed in a round of TSCE, and the channel estimation is highly flexible.

Optionally, the obtaining communication quality between the AP and a STA includes:
determining the communication quality between the AP and the STA based on communication posterior information between the AP and the STA in an aging time period, where the aging time period is an interval time period of two adjacent rounds of TSCE, and the communication posterior information includes at least one of a packet loss rate and a throughput.

In a possible implementation, the determining a quantity of channel estimations that need to be performed in a current round of time smooth channel estimation TSCE includes:
when communication quality in a previous aging time period does not reach a communication quality criterion, increasing the quantity of channel estimations that need to be performed in the current round of TSCE.

It should be noted that channel noise has a Gaussian characteristic, to be specific, the channel noise obeys, in time sequence, a Gaussian distribution in which a mean is 0. Because a channel can keep constant in a short time, it may be considered that only channel noise changes in a round of TSCE. When the communication quality in the previous aging time period does not reach the communication quality criterion, it indicates that accuracy of channel estimation in the previous aging time period is relatively low. The quantity of channel estimations that need to be performed in the current round of TSCE is increased, average channel noise may be increased in time domain, and impact of channel noise on channel estimation is reduced, to improve accuracy of channel estimation.

Optionally, when the communication quality in the previous aging time period does not reach the communication quality criterion, the method further includes:
resetting a quantity of qualification times of communication quality to zero, where the quantity of qualification times indicates a quantity of times that the communication quality reaches the communication quality criterion in a continuous aging time period.

In another possible implementation, the determining a quantity of channel estimations that need to be performed in a current round of time smooth channel estimation TSCE includes:

when communication quality in a previous aging time period reaches a communication quality criterion, increasing a quantity of qualification times of communication quality by 1 to obtain an updated quantity of qualification times, where the quantity of qualification times indicates a quantity of times that the communication quality reaches the communication quality criterion in a continuous aging time period; and
when the updated quantity of qualification times reaches a criterion of the quantity of qualification times, reducing the quantity of channel estimations that need to be performed in the current round of TSCE, and resetting the quantity of qualification times of communication quality to zero.

It should be noted that, when accuracy of the CSI obtained based on a current quantity of channel estimations performed in each round of TSCE can support stable communication, the quantity of channel estimations that need to be performed in the current round of TSCE may be decreased, to minimize time overheads occupied by an air interface and improve channel utilization while ensuring accuracy of channel estimation.

In still another possible implementation, the determining, based on the communication quality, a quantity of channel estimations that need to be performed in a current round of time smooth channel estimation TSCE includes:

when communication quality in a previous aging time period reaches a communication quality criterion, increasing a quantity of qualification times of communication quality by 1 to obtain an updated quantity of qualification times, where the quantity of qualification times indicates a quantity of times that the communication quality reaches the communication quality criterion in a continuous aging time period; and
when the updated quantity of qualification times does not reach a criterion of the quantity of qualification times, determining that the quantity of channel estimations that need to be performed in the current round of TSCE is the same as a quantity of channel estimations performed in a previous round of TSCE.

It should be noted that in a communications system having relatively large noise interference, for example, in a Wi-Fi communications network, a plurality of channel estimations are performed on a wireless channel of an air interface in a single round, and channel estimation results are averaged in time sequence. Compared with an LS algorithm, impact of noise on a channel estimation result is greatly reduced, accuracy of channel estimation is improved, reliability of precoding is further improved, and performance of the communications system is improved. In addition, in this application, the AP adjusts, in real time based on the communication quality, a quantity of channel estimations that need to be performed in each round of TSCE. By balancing the communication quality, channel estimation complexity, and air interface occupation overheads, time overheads occupied by the air interface are minimized and channel utilization is improved while the communication quality is ensured.

In a first manner, the CSI is obtained by implicit channel estimation, the quantity of channel estimations that need to be performed in the current round of TSCE is N, N is a positive integer, and the channel estimation device is the AP; and

the obtaining channel state information CSI between the AP and the STA includes:

sending a trigger frame to the STA, where the trigger frame carries the quantity N of channel estimations that need to be performed in the current round of TSCE; receiving a training data packet sent by the STA, where the training data packet is generated by the STA based on the trigger frame, and the training data packet includes N groups of training fields; separately performing channel estimation on the N groups of training fields to obtain N channel matrixes; and averaging the N channel matrixes to obtain the CSI between the AP and the STA.

Optionally, the method further includes:

generating the trigger frame based on a quantity of transmit antennas of the STA, where the trigger frame carries a quantity of training symbols in each group of training fields, and the quantity of training symbols in each group of training fields is the same as the quantity of transmit antennas of the STA.

The training data packet is a time smooth channel estimation-null data packet TSCE-NDP, and the TSCE-NDP includes N repeated groups of training fields.

In a second manner, the CSI is obtained by explicit channel estimation, the quantity of channel estimations that need to be performed in the current round of TSCE is N, N is a positive integer, and the channel estimation device is the STA; and

the obtaining channel state information CSI between the AP and the STA includes:

generating a training data packet, where the training data packet includes N groups of training fields; sending the training data packet to the STA; sending a CSI feedback request to the STA, where the CSI feedback request is used to request the STA to report the CSI between the AP and the STA, and the CSI is obtained after the STA averages N channel matrixes after separately performing channel estimation on the N groups of training fields to obtain the N channel estimation matrixes; and receiving the CSI reported by the STA.

Optionally, before the sending the training data packet to the STA, the method further includes:

sending an announcement frame to the STA, where the announcement frame is used to instruct the STA to enter a training data packet receiving state, and the announcement frame carries the quantity N of channel estimations that need to be performed in the current round of TSCE; where

the announcement frame is a time smooth channel estimation-null data packet announcement frame TSCE-NDPA, a TSCE field is set in the TSCE-NDPA, and the TSCE field carries the quantity N of channel estimations.

According to a second aspect, a channel estimation method is provided and applied to a STA, and the method includes:

receiving a trigger frame sent by an access point device AP, where the trigger frame carries a quantity N of channel estimations that need to be performed in a current round of time smooth channel estimation TSCE, and N is a positive integer;

generating a training data packet based on the trigger frame, where the training data packet includes N groups of training fields; and

sending the training data packet to the AP.

Optionally, the trigger frame carries a quantity of training symbols in each group of training fields, and the quantity of training symbols in each group of training fields is the same as a quantity of transmit antennas of the STA; and

the generating a training data packet based on the trigger frame includes:

generating a target mapping matrix based on the quantity of training symbols in each group of the training fields and the quantity N of channel estimations that need to be performed in the current round of TSCE; and

performing mapping on the training symbols by using the target mapping matrix, to obtain the N groups of training fields.

According to a third aspect, a channel estimation apparatus is provided and is applied to an access point device AP, and the apparatus includes:

a first obtaining module, configured to obtain communication quality between the AP and a user terminal STA;
a determining module, configured to determine, based on the communication quality, a quantity of channel estimations that need to be performed in a current round of time smooth channel estimation TSCE; and
a second obtaining module, configured to obtain channel state information CSI between the AP and the STA, where the CSI is determined by a channel estimation device based on a channel estimation result obtained after the current round of TSCE is performed based on the determined quantity of channel estimations.

Optionally, the first obtaining module is configured to:
determine the communication quality between the AP and the STA based on communication posterior information between the AP and the STA in an aging time period, where the aging time period is an interval time period of two adjacent rounds of TSCE, and the communication posterior information includes at least one of a packet loss rate and a throughput.

Optionally, the determining module is configured to:
when communication quality in a previous aging time period does not reach a communication quality criterion, increase the quantity of channel estimations that need to be performed in the current round of TSCE.

Optionally, when the communication quality in the previous aging time period does not reach the communication quality criterion, the determining module is further configured to:
reset a quantity of qualification times of communication quality to zero, where the quantity of qualification times indicates a quantity of times that the communication quality reaches the communication quality criterion in a continuous aging time period.

Optionally, the determining module is configured to:

when communication quality in a previous aging time period reaches a communication quality criterion, increase a quantity of qualification times of communication quality by 1 to obtain an updated quantity of qualification times, where the quantity of qualification times indicates a quantity of times that the communication quality reaches the communication quality criterion in a continuous aging time period; and
when the updated quantity of qualification times reaches a criterion of the quantity of qualification times, reduce the quantity of channel estimations that need to be performed in the current round of TSCE, and reset the quantity of qualification times of communication quality to zero.

Optionally, the determining module is configured to:

when communication quality in a previous aging time period reaches a communication quality criterion, increase a quantity of qualification times of communication quality by 1 to obtain an updated quantity of qualification times, where the quantity of qualification times indicates a quantity of times that the communication quality reaches the communication quality criterion in a continuous aging time period; and
when the updated quantity of qualification times does not reach a criterion of the quantity of qualification times, determine that the quantity of channel estimations that need to be performed in the current round of TSCE is the same as a quantity of channel estimations performed in a previous round of TSCE.

Optionally, the quantity of channel estimations that need to be performed in the current round of TSCE is N, N is a positive integer, and the channel estimation device is the AP; and
the second obtaining module is configured to:

send a trigger frame to the STA, where the trigger frame carries the quantity N of channel estimations that need to be performed in the current round of TSCE;
receive a training data packet sent by the STA, where the training data packet is generated by the STA based on the trigger frame, and the training data packet includes N groups of training fields;
separately perform channel estimation on the N groups of training fields to obtain N channel matrixes; and
average the N channel matrixes to obtain the CSI between the AP and the STA.

Optionally, the apparatus further includes:
a generation module, configured to generate the trigger frame based on a quantity of transmit antennas of the STA, where the trigger frame carries a quantity of training symbols in each group of training fields, and the quantity of training symbols in each group of training fields is the same as the quantity of transmit antennas of the STA.

Optionally, the training data packet is a time smooth channel estimation-null data packet TSCE-NDP, and the TSCE-NDP includes N repeated groups of training fields.

Optionally, the quantity of channel estimations that need to be performed in the current round of TSCE is N, N is a positive integer, and the channel estimation device is the STA; and

the second obtaining module is configured to:

generate a training data packet, where the training data packet includes N groups of training fields;

send the training data packet to the STA;

send a CSI feedback request to the STA, where the CSI feedback request is used to request the STA to report the CSI between the AP and the STA, and the CSI is obtained after the STA averages N channel matrixes after separately performing channel estimation on the N groups of training fields to obtain the N channel estimation matrixes; and

receive the CSI reported by the STA.

Optionally, the apparatus further includes:

a sending module, configured to send an announcement frame to the STA, where the announcement frame is used to instruct the STA to enter a training data packet receiving state, and the announcement frame carries the quantity N of channel estimations that need to be performed in the current round of TSCE.

Optionally, the announcement frame is a time smooth channel estimation-null data packet announcement frame TSCE-NDPA, a TSCE field is set in the TSCE-NDPA, and the TSCE field carries the quantity N of channel estimations.

According to a fourth aspect, a channel estimation apparatus is provided and is applied to a user terminal STA, and the apparatus includes:

a receiving module, configured to receive a trigger frame sent by an access point device AP, where the trigger frame carries a quantity N of channel estimations that need to be performed in a current round of time smooth channel estimation TSCE, and N is a positive integer;

a generation module, configured to generate a training data packet based on the trigger frame, where the training data packet includes N groups of training fields; and

a sending module, configured to send the training data packet to the AP.

Optionally, the trigger frame carries a quantity of training symbols in each group of training fields, and the quantity of training symbols in each group of training fields is the same as a quantity of transmit antennas of the STA; and the generation module is configured to:

generate a target mapping matrix based on the quantity of training symbols in each group of the training fields and the quantity N of channel estimations that need to be performed in the current round of TSCE; and

perform mapping on the training symbols by using the target mapping matrix, to obtain the N groups of training fields.

According to a fifth aspect, a channel estimation apparatus is provided, and is applied to an access point device AP, including a memory, a processor, and a computer program that is stored in the memory and that can be run on the processor, and when the processor executes the computer program, the channel estimation method according to any one of the possible implementations in the first aspect is implemented.

According to a sixth aspect, a communications system is provided, including an access point device AP and a user terminal STA; and

the AP includes the channel estimation apparatus according to any one of the possible implementations in the third aspect.

According to a seventh aspect, a computer storage medium is provided, and the computer readable storage medium stores an instruction, and when the instruction is executed by a processor of an AP, the channel estimation method according to any one of the possible implementations in the first aspect is implemented; or when the instruction is executed by a processor of a STA, the channel estimation method according to any one of the possible implementations in the second aspect is implemented.

The technical solution provided in the embodiments of this application brings the following beneficial effects:

The AP determines, based on the communication quality, a quantity of channel estimations that need to be performed in a round of TSCE, and channel estimation is highly flexible. In a communications system having relatively large noise interference, for example, in a Wi-Fi communications network, a plurality of channel estimations are performed on a wireless channel of an air interface in a single round, and channel estimation results are averaged in time sequence. Compared with an LS algorithm, impact of noise on the channel estimation result is greatly reduced, accuracy of channel estimation is improved, reliability of precoding is further improved, and performance of the communications system is improved. In addition, in this application, the AP adjusts, in real time based on the communication quality, a quantity of channel estimations that need to be performed in each round of TSCE. By balancing the communication quality, channel estimation complexity, and air interface occupation overheads, time overheads occupied by the air interface are minimized and channel utilization is improved while the communication quality is ensured.

## BRIEF DESCRIPTION OF DRAWINGS

FIG. 1 is a schematic structural diagram of a communications system according to an embodiment of this application;

FIG. 2 is a schematic structural diagram of an MU-MIMO communications system according to an embodiment of this application;

FIG. 3 is a schematic structural diagram of a network-level MIMO communications system according to an embodiment of this application;

FIG. 4 is a flowchart of a channel estimation method according to an embodiment of this application;

FIG. 5 is a flowchart of a method for determining a quantity of channel estimations that need to be performed in a current round of TSCE according to an embodiment of this application;

FIG. 6 is a schematic structural diagram of a TSCE-NDP according to an embodiment of this application;

FIG. 7 is a schematic structural diagram of another MU-MIMO communications system according to an embodiment of this application;

FIG. 8 is a schematic structural diagram of another TSCE-NDP according to an embodiment of this application;

FIG. 9 is a diagram of a comparison between a channel estimation amplitude and a real channel amplitude that are respectively obtained by using single channel estimation and five channel estimations (TSCE) according to an embodiment of this application;

FIG. 10 is a diagram of a comparison between a channel estimation phase and a real channel phase that are respectively obtained by using single channel estimation and five channel estimations (TSCE) according to an embodiment of this application;

FIG. 11 is a flowchart of another channel estimation method according to an embodiment of this application;

FIG. 12 is a schematic structural diagram of a TSCE-NDPA according to an embodiment of this application;

FIG. 13 is a constellation diagram of STA-side decoding after channel estimation is performed by using a conventional LS algorithm;

FIG. 14 is a constellation diagram of STA-side decoding after channel estimation is performed by using a channel estimation method provided in this application;

FIG. 15 is a schematic structural diagram of a channel estimation apparatus according to an embodiment of this application;

FIG. 16 is a schematic structural diagram of another channel estimation apparatus according to an embodiment of this application;

FIG. 17 is a schematic structural diagram of still another channel estimation apparatus according to an embodiment of this application;

FIG. 18 is a schematic structural diagram of a channel estimation apparatus according to another embodiment of this application; and

FIG. 19 is a schematic structural diagram of a channel estimation apparatus according to still another embodiment of this application.

## DESCRIPTION OF EMBODIMENTS

To make the objectives, technical solutions, and advantages of this application clearer, the following further describes the implementations of this application in detail with reference to the accompanying drawings.

A channel estimation method provided in the embodiments of this application may be applied to a communications system having relatively large channel noise interference, or may be applied to a communications system having relatively complex subcarriers, or may be applied to a communications system having a burst and a mobility feature.

For example, the channel estimation method provided in the embodiments of this application may be applied to a WLAN. The WLAN includes a plurality of basic service sets (Basic Service Set, BSS). A node in the basic service set is a station. The station includes an access point station (AP) and a non-access point station (STA). Each basic service set includes one AP and a plurality of STAs associated with the AP.

The AP may also be referred to as a wireless access point, a hotspot, or the like. The AP is an access point through which a mobile user accesses a wired network. The AP is mainly deployed in a house, inside a building, and inside a park. A typical coverage radius is tens of meters to hundreds of meters. Certainly, the AP may also be deployed outdoors. The AP is equivalent to a bridge that connects a wired network and a wireless network. A major function of the AP is to connect various STAs and connect the wireless network to the wired network. Optionally, the AP may be a terminal device or a network device with a Wi-Fi chip, for example, a router or a smartphone that can provide an AP function or service. Optionally, the AP is a device that supports the 802.11ax standard. For example, the AP may be a device that supports a plurality of WLAN standards, such as 802.11ac, 802.11n, 802.11g, 802.11b, and 802.11a.

The STA may be a wireless communications chip, a wireless sensor, or a wireless communications terminal, for example, a mobile phone that supports a WiFi communication function, a tablet computer that supports a WiFi communication function, a set top box that supports a WiFi communication function, a smart TV that supports a WiFi communication function, an intelligent wearable device that supports a WiFi communication function, a vehicle-mounted communications device that supports a WiFi communication function, a computer that supports a WiFi communication function, or the like.

It should be noted that in a WLAN system 802.11ax in which an orthogonal frequency division multiple access (Orthogonal Frequency Division Multiple Access, OFDMA) technology is introduced, the AP may perform uplink and downlink transmission on different time-frequency resources to different STAs. The AP may perform uplink and downlink transmission in different modes, for example, in a multi-user multiple-input multiple-output (Multi-User Multiple-Input Multiple-Output, MU-MIMO) mode or in a network-level MIMO mode.

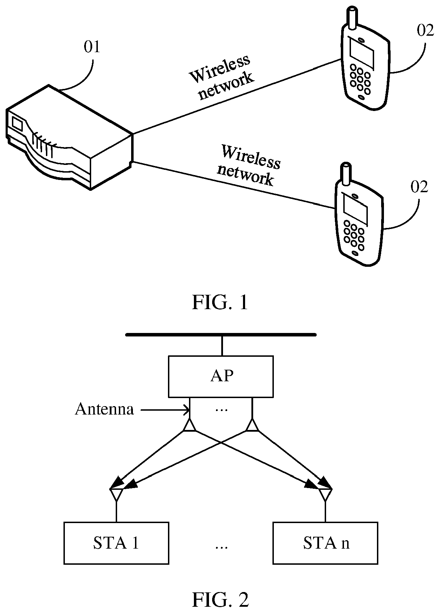

FIG. 1 is a schematic structural diagram of a communications system according to an embodiment of this application. As shown in FIG. 1, the communications system includes an AP 01 and at least one STA 02, and the AP 01 communicates with each STA 02 by using a wireless network.

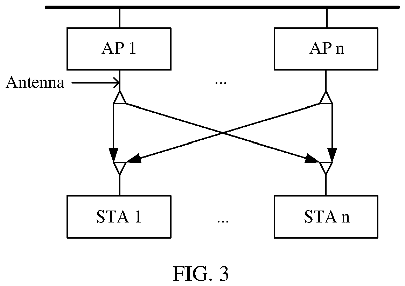

Optionally, the communications system provided in this embodiment of this application includes an MU-MIMO communications system, a network-level MIMO communications system, and the like. For example, FIG. 2 is a schematic structural diagram of an MU-MIMO communications system according to an embodiment of this application. As shown in FIG. 2, in the MU-MIMO communications system, a single AP sends a data stream to a plurality of STAs (including a STA 1 to a STA n). FIG. 3 is a schematic structural diagram of a network-level MIMO communications system according to an embodiment of this application. As shown in FIG. 3, in the network-level MIMO communications system, a plurality of APs cooperate by using an upper-layer controller or wireless control, and the plurality of APs (including an AP 1 to an AP n) are virtualized into one AP to send a data stream to the plurality of STAs (including a STA 1 to a STA n). In the MU-MIMO communications system and the network-level MIMO communications system, accuracy of channel estimation needs to be ensured, so that inter-stream interference of a plurality of STAs can be eliminated or suppressed by precoding. Data is transmitted between the AP and the STA through an air interface.

Optionally, the AP obtains CSI between the AP and the STA by using implicit channel estimation, or the AP obtains CSI between the AP and the STA by using explicit channel estimation. An implementation process of the implicit channel estimation includes: The AP sends a channel estimation request to the STA; the STA sends a channel estimation training sequence to the AP based on the channel estimation request; and the AP performs channel estimation based on the received channel estimation training sequence to obtain the CSI. An implementation process of the explicit channel estimation includes: The AP sends a channel estimation training sequence to the STA; and the STA performs channel estimation based on the received channel estimation training sequence to obtain the CSI, and feeds back the CSI to the AP through the air interface. The CSI obtained by the implicit channel estimation is CSI of an uplink channel, and the CSI obtained by the explicit channel estimation is CSI of a downlink channel. The CSI of the uplink channel may be equivalent to the CSI of the downlink channel, and therefore, when the CSI is obtained by the implicit channel estimation, the STA does not need to feed back channel information.

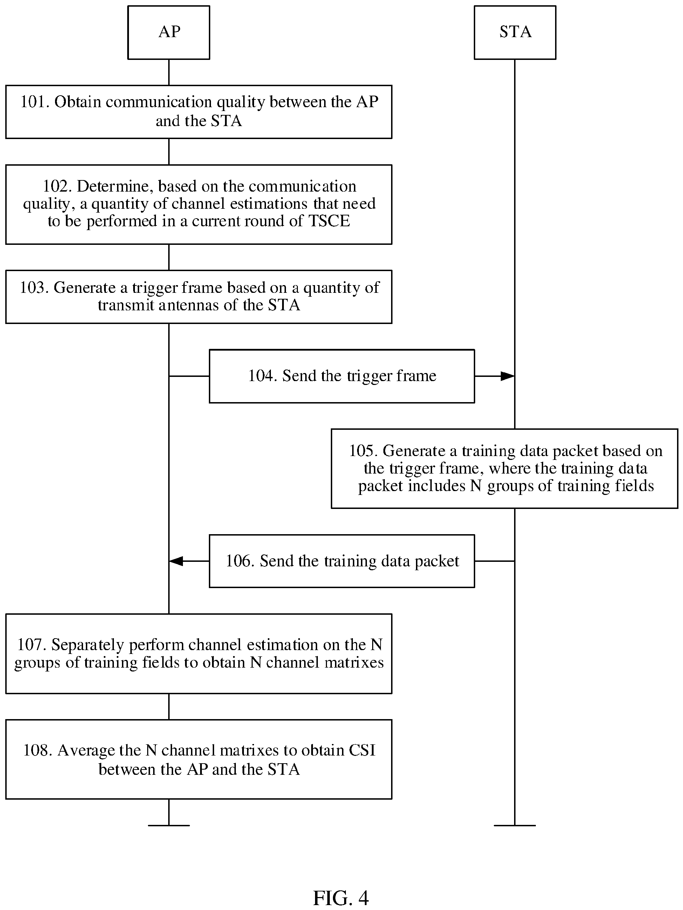

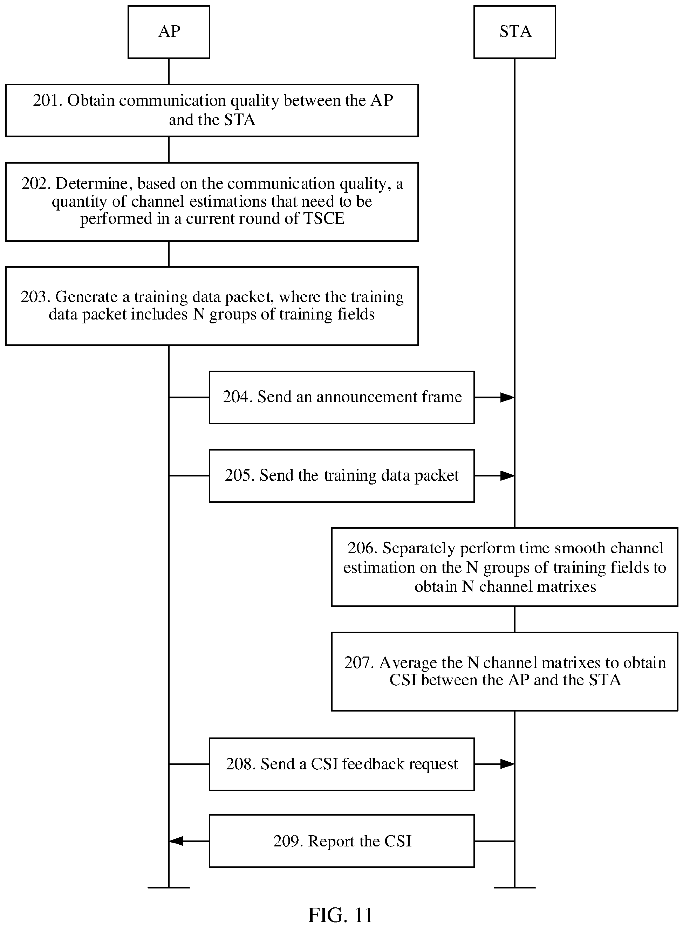

The following embodiments of this application provide two implementations of time smooth channel estimation (Time Smooth Channel Estimation, TSCE). A channel estimation method shown in FIG. 4 is corresponding to the foregoing implicit channel estimation, and a channel estimation device is the AP. A channel estimation method shown in FIG. 11 is corresponding to the foregoing explicit channel estimation, and a channel estimation device is the STA.

FIG. 4 is a flowchart of a channel estimation method according to an embodiment of this application. The method may be applied to a communications system shown in any one of FIG. 1 to FIG. 3. As shown in FIG. 4, the method includes the following steps.

Step 101: An AP obtains communication quality between the AP and a STA.

Optionally, the AP determines the communication quality between the AP and the STA based on communication posterior information between the AP and the STA in an aging time period. The aging time period is an interval time period of two adjacent rounds of TSCE, and the communication posterior information includes at least one of a packet loss rate and a throughput.

At a start moment of each aging time period, the AP obtains CSI between the AP and the STA, determines a precoding matrix in a corresponding aging time period based on the CSI, performs, by using the precoding matrix, precoding on a data stream that needs to be sent in the aging time period, and then transmits a data stream obtained by the precoding to the STA in the aging time period. In other words, each aging time period includes two phases, a first phase is a channel estimation phase, and a second phase is a data stream transmission phase.

For example, when the communication posterior information includes the packet loss rate, a manner of determining the communication quality between the AP and the STA based on the communication posterior information between the AP and the STA in the aging time period includes:

receiving an acknowledgment (Acknowledgement, ACK) returned by the STA, where the ACK is sent to the AP after the STA receives a data packet sent by the AP and successfully decodes the data packet; determining the packet loss rate in the aging time period based on a quantity of data packets sent to the STA and a quantity of received ACKs in the aging time period; and determining the communication quality between the AP and the STA in the aging time period based on the packet loss rate in the aging time period.

It should be noted that, after the AP sends a data packet to the STA, the AP does not receive, within a preset time period, an ACK returned by the STA, and the AP determines that the data packet is lost.

Step 102: The AP determines, based on the communication quality, a quantity of channel estimations that need to be performed in a current round of TSCE.

Optionally, in an initialization phase in which the AP is connected to the STA, a quantity of channel estimations that need to be performed in a round of TSCE is set to 1, and in a subsequent data stream transmission process, the AP determines, in real time based on the communication quality, a quantity of channel estimations that need to be performed in each round of TSCE. Optionally, a quantity of channel estimations that need to be performed in some rounds of TSCE is at least 2. For example, when there is relatively large channel noise interference in the communications system, a plurality of channel estimations need to be performed in a round of TSCE.

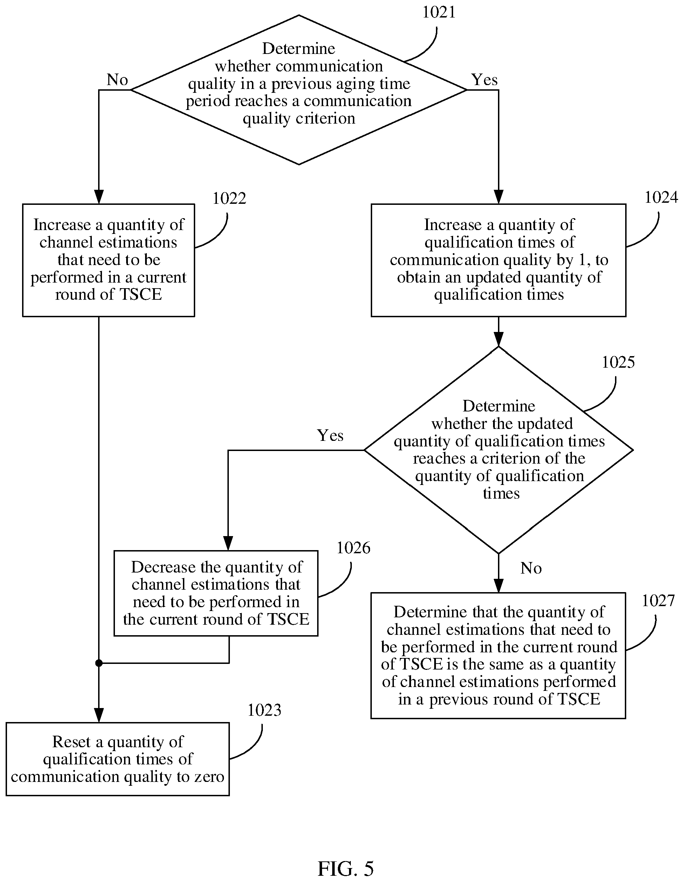

For example, FIG. 5 is a flowchart of a method for determining a quantity of channel estimations that need to be performed in a current round of TSCE according to an embodiment of this application. As shown in FIG. 5, the method includes the following steps.

Step 1021: Determine whether communication quality in a previous aging time period reaches a communication quality criterion. When the communication quality in the previous aging time period does not reach the communication quality criterion, step 1022 is performed. When the communication quality in the previous aging time period reaches the communication quality criterion, step 1024 is performed.

Optionally, the communication quality criterion includes a qualification criterion of a communication indicator such as a packet loss rate and a throughput. For example, the communication quality criterion includes a first value indicating the packet loss rate. When the packet loss rate between the AP and the STA in an aging time period is less than the first value, it is determined that the communication quality in the aging time period reaches the communication quality criterion. The first value may be a percentage value, for example, 90%.

For another example, when the communication quality criterion includes a second value indicating a modulation and coding scheme (Modulation code scheme, MCS) order by which a throughput decreases, when the MCS order by which the throughput of the AP in an aging time period decreases is less than the second value, it is determined that the communication quality in the aging time period reaches the communication quality criterion. For example, the second value may be 2, and when the throughput decreases from 16 quadrature amplitude modulation (Quadrature Amplitude Modulation, QAM) to binary phase shift keying (Binary Phase Shift Keying, BPSK), it is determined that the communication quality in the aging time period does not reach the communication quality criterion. The throughput may be associated with the packet loss rate. When the packet loss rate is greater than 10%, the MCS decreases by one order.

Step 1022: Increase the quantity of channel estimations that need to be performed in the current round of TSCE.

It should be noted that channel noise has a Gaussian characteristic, to be specific, the channel noise obeys, in time sequence, a Gaussian distribution in which a mean is 0. Because a channel can keep constant in a short time, it may be considered that only channel noise changes in a round of TSCE. When the communication quality in the previous aging time period does not reach the communication quality criterion, it indicates that accuracy of channel estimation in the previous aging time period is relatively low. The quantity of channel estimations that need to be performed in the current round of TSCE is increased, average channel noise may be increased in time domain, and impact of channel noise on channel estimation is reduced, to improve accuracy of channel estimation.

Optionally, a quantity of channel estimations increased each time is a preset fixed value, or the quantity of channel estimations is determined based on the communication quality in the previous aging time period. For example, the increased quantity of channel estimations is positively correlated with the packet loss rate.

Step 1023: Reset a quantity of qualification times of communication quality to zero.

The quantity of qualification times of communication quality indicates a quantity of times that the communication quality reaches the communication quality criterion in a continuous aging time period. In this embodiment of this application, the quantity of qualification times of communication quality is used to measure whether the CSI obtained based on a current quantity of channel estimations performed in each round of TSCE reaches accuracy of supporting stable communication.

Step 1024: Increase the quantity of qualification times of communication quality by 1, to obtain an updated quantity of qualification times.

Step 1025: Determine whether the updated quantity of qualification times reaches a criterion of the quantity of qualification times. When the updated quantity of qualification times reaches the criterion of the quantity of qualification times, step 1026 is performed. When the updated quantity of qualification times does not reach the criterion of the quantity of qualification times, step 1027 is performed.

It should be noted that when the updated quantity of qualification times reaches the criterion of the quantity of qualification times, it is determined that accuracy of the CSI obtained based on the current quantity of channel estimations performed in each round of TSCE can support stable communication.

Optionally, the criterion of the quantity of qualification times is determined based on a specified time length of an aging time period, or is set based on an application environment. A specified value and a setting basis of the criterion of the quantity of qualification times are not limited in this embodiment of this application.

Step 1026: Decrease the quantity of channel estimations that need to be performed in the current round of TSCE, and perform step 1023.

It should be noted that, when accuracy of the CSI obtained based on the current quantity of channel estimations performed in each round of TSCE can support stable communication, the quantity of channel estimations that need to be performed in the current round of TSCE may be decreased, to minimize time overheads occupied by an air interface and improve channel utilization while ensuring accuracy of channel estimation.

Further, the quantity of qualification times of communication quality is reset to zero, so as to re-count a quantity of qualification times of communication quality based on a quantity of channel estimations performed in a new round of TSCE.

Step 1027: Determine that the quantity of channel estimations that need to be performed in the current round of TSCE is the same as a quantity of channel estimations performed in a previous round of TSCE.

In the foregoing steps 1022 and 1026, an adjustment amplitude of a quantity of channel estimations may be adjusted based on a change degree of the communication quality. For example, when the communication quality repeats relatively fast, the adjustment amplitude may be decreased. The adjustment amplitude of the quantity of channel estimations is not limited in this embodiment of this application.

Optionally, the quantity of channel estimations that need to be performed in each round of TSCE jumps based on a step length. The step length may be a fixed step length, or may be a dynamic step length adjusted in real time based on the change degree of the communication quality. This is not limited in this embodiment of this application.

Optionally, in another implementation in this embodiment of this application, when the AP determines that a quantity of packet losses reaches a threshold within an aging time period, the AP ends current data stream transmission, and starts a new round of time smooth channel estimation after increasing a quantity of channel estimations that need to be performed in the TSCE, to be specific, ends counting in the current aging time period and starts counting in a next aging time period, to reduce data packet losses in a transmission process and ensure the communication quality between the AP and the STA.

Step 103: The AP generates a trigger frame based on a quantity of transmit antennas of the STA.

It should be noted that the trigger frame is used to trigger the STA to generate a training data packet. The trigger frame carries the quantity N of channel estimations that need to be performed in the current round of TSCE and a quantity of training symbols in each group of training fields, where N is a positive integer. One group of training fields is used to perform one channel estimation, and when the quantity of channel estimations that need to be performed in the current round of TSCE is N, the training data packet generated by the STA includes N groups of training fields. Optionally, the quantity of training symbols in each group of training fields is the same as the quantity of transmit antennas of the STA.

Optionally, for a frame format of the trigger frame provided in this embodiment of this application, refer to a frame format of a trigger frame (Trigger frame) in the 802.11ax standard. In this application, trigger-dependent common info (Trigger Dependent Common Info) in common info (Common Info) in the trigger frame is defined as a TSCE field, to obtain the foregoing trigger frame. In this application, the trigger frame is referred to as a trigger-TSCE frame. Content in the trigger dependent common info may be customized, and the conventional trigger frame in the 802.11ax standard implement different functions by defining the subfield as different content.

For example, in this embodiment of this application, a length of the TSCE field in the trigger-TSCE frame is defined as 8 bits (bits), and a bit value is used to indicate a quantity of groups of training fields in the training data packet generated by the STA and a structure of a mapping matrix (a matrix P). Table 1 shows a correspondence between a bit value in the TSCE field and a field description according to this embodiment of this application.

Table 1

| TSCE | $N_{TSCE}$ | Mapping matrix |
|---|---|---|
| 00000000 | 0 | Repeat once |
| 00000001 | 1 | Repeat twice |
| 00000010 | 2 | Repeat three times |

(continued)

| TSCE | $N_{TSCE}$ | Mapping matrix |
|------|------|------|
| ... | ... | ... |

Referring to Table 1, $N_{TSCE}$ is used to indicate a quantity of groups of training fields, and the quantity of groups of training fields is equal to $N_{TSCE}+1$. It is assumed that a quantity of training symbols in each group of training fields is n, and n is an integer greater than or equal to 1. A mapping matrix is repeated once, and it indicates that a size of the mapping matrix is n x n. The mapping matrix is repeated twice, and it indicates that a size of the mapping matrix is n x 2n. By analogy, if the mapping matrix is repeated k times, a size of the mapping matrix is n x kn.

The quantity of training symbols in each group of training fields may be carried in a number of HE-LTF symbols in the common info field in the trigger-TSCE. For an operation on another field in the trigger-TSCE frame, refer to an operation of a corresponding field in the trigger frame. Details are not described in this embodiment of this application.

Step 104: The AP sends the trigger frame to the STA.

Step 105: The STA generates the training data packet based on the trigger frame, where the training data packet includes N groups of training fields.

The training symbol is a high efficiency long training field (High Efficiency Long Training Field, HE-LTF) in the 802.11ax standard. After receiving the trigger frame, the STA obtains a quantity of HE-LTFs in each group of training fields based on a number of HE-LTF symbols (Number Of HE-LTF Symbols) in the common info field in the trigger-TSCE, and then obtains the quantity of groups of training fields (namely, the quantity of channel estimations that need to be performed in the current round of TSCE) and a quantity of repetitions of the mapping matrix based on the TSCE field.

Further, the STA generates a target mapping matrix based on the quantity of training symbols in each group of training fields and the quantity N of channel estimations that need to be performed in the current round of TSCE, and performs mapping on the training symbols by using the target mapping matrix, to obtain the N groups of training fields, so as to generate the training data packet.

The mapping matrix is an orthogonal matrix. For example, it is assumed that the quantity of training symbols in each group of training fields is 4, a matrix whose basic mapping matrix is 4 x 4 is represented as $\begin{bmatrix} 1 & -1 & 1 & 1 \\ 1 & 1 & -1 & 1 \\ 1 & 1 & 1 & -1 \\ -1 & 1 & 1 & 1 \end{bmatrix}$.

The target mapping matrix is obtained by repeating the basic mapping matrix in a row direction for N times, and may be represented as:

$$\begin{bmatrix} 1 & -1 & 1 & 1 & 1 & -1 & 1 & 1 & ... & 1 & -1 & 1 & 1 \\ 1 & 1 & -1 & 1 & 1 & 1 & -1 & 1 & ... & 1 & 1 & -1 & 1 \\ 1 & 1 & 1 & -1 & 1 & 1 & 1 & -1 & ... & 1 & 1 & 1 & -1 \\ -1 & 1 & 1 & 1 & -1 & 1 & 1 & 1 & ... & -1 & 1 & 1 & 1 \end{bmatrix}$$

The target mapping matrix is used to perform mapping on the training symbols, to be specific, the HE-LTF is sequentially multiplied by a corresponding column of the target mapping matrix in a composition order, to finally obtain the N groups of training fields.

It should be noted that mapping is performed on the HE-LTF by using the target mapping matrix. After receiving the training data packet by using each antenna, a receive end (for example, the AP) can solve, based on a plurality of HE-LTFs in each group of training fields and the target mapping matrix, channel information from the plurality of transmit antennas to a plurality of receive antennas, that is, the CSI.

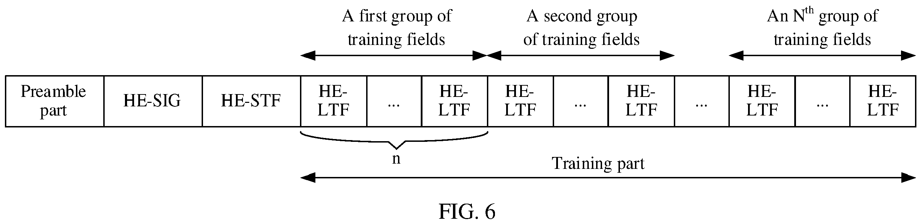

Because the training data packet is sent by using a physical layer in a communications network, the training data packet may be referred to as a physical layer protocol data unit (Physical Layer Protocol Data Unit, PPDU). In this embodiment of this application, the training data packet may be a time smooth channel estimation-null data packet (Time Smooth Channel Estimation-Null Data Packet, TSCE-NDP), and the TSCE-NDP includes N repeated groups of training fields. For example, FIG. 6 is a schematic structural diagram of a TSCE-NDP according to an embodiment of this application. As shown in FIG. 6, the TSCE-NDP includes a preamble part (Legacy-Header), a high efficient signal field (HE-SIG), an automatic gain control field (for example, a high efficiency short training field (High Efficiency Short Training Field, HE-STF)), and a training part. The training part includes N groups of training fields, and each group of training fields includes n HE-LTFs. For functions and content of a field other than the training part in the TSCE-NDP, refer to a frame structure of an HE NDP PPDU in the 802.11ax standard. Details are not described herein in this application.

Step 106: The STA sends the training data packet to the AP.

Step 107: The AP separately performs channel estimation on the N groups of training fields to obtain N channel matrixes.

Optionally, the AP sequentially extracts, based on the quantity of groups of training fields and the quantity of HE-LTFs in each group of training fields, HE-LTFs from a training part in a received TSCE-NDP for grouping, and then performs, based on the target mapping matrix, channel de-estimation on each group of HE-LTFs by using a conventional channel estimation method, to obtain the N groups of channel matrixes.

Step 108: The AP averages the N channel matrixes to obtain the CSI between the AP and the STA.

Optionally, the AP averages the N channel matrixes by weighted averaging or alpha averaging to obtain an average channel matrix, namely, the CSI between the AP and the STA. An average manner is not limited in this embodiment of this application.

Further, after obtaining the average channel matrix, the AP performs precoding by using the average channel matrix, and performs subsequent data stream transmission. For implementation of this process, refer to a related technology. Details are not described herein.

Optionally, in the communications system provided in this embodiment of this application, step 101 to step 108 may be repeatedly performed. The AP adjusts, in real time based on the communication quality, the quantity of channel estimations that need to be performed in each round of TSCE. By balancing the communication quality, channel estimation complexity, and air interface occupation overheads, time overheads occupied by the air interface are minimized and channel utilization is improved while the communication quality is ensured, thereby improving performance of the communications system.

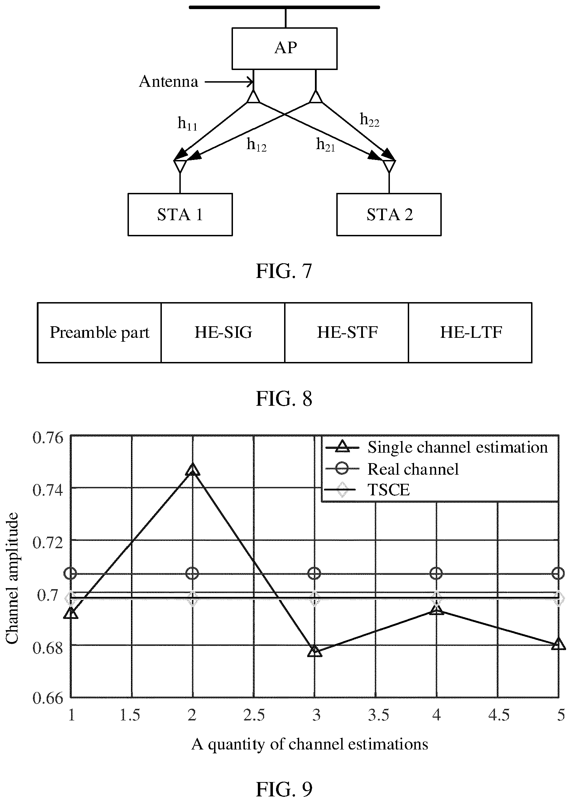

For example, FIG. 7 is a schematic structural diagram of an MU-MIMO communications system according to an embodiment of this application. As shown in FIG. 7, the MU-MIMO communications system includes two single-antenna STAs (including a STA 1 and a STA 2) and one two-antenna AP. In this application, the MU-MIMO communications system shown in FIG. 7 is used as an example to describe the foregoing channel estimation method and an implementation process of data stream transmission.

S11. In an initialization phase in which the AP is connected to the STA 1, the AP determines that a quantity of channel estimations that need to be performed in TSCE is 1.

S12. The AP sends a trigger-TSCE frame to the STA 1, where a value of a TSCE field in the trigger-TSCE frame is set to 00000000, and a value of a number of HE-LTF symbols in a common info field is set to 000.

S13. After receiving the trigger-TSCE frame through an air interface, the STA 1 determines, based on the value of the TSCE field, that a quantity of groups of training fields is 1, and determines, based on the value of the number of HE-LTF symbols, that a quantity of HE-LTFs in each group of training fields is 1, to generate a TSCE-NDP shown in FIG. 8.

S14. The STA 1 sends the TSCE-NDP to the AP.

S15. The AP performs channel estimation to obtain a first channel vector $H_{STA\text{-}1} = [h_{11}, h_{12}]$

Optionally, for a method for obtaining a channel vector between the AP and the STA 2, refer to S11 to S15. A second channel vector $H_{STA\text{-}2} = [h_{21}, h_{22}]$ is obtained.

S16. The AP obtains a channel estimation matrix $H$ based on the first channel vector $H_{STA\text{-}1}$ and the second channel vector $H_{STA\text{-}2}$, generates a zero-forcing precoding matrix $H^{-1}$ based on the channel estimation matrix $H$, and sends downlink data $[X_1, X_2]$.

S17. The STA 1 and the STA 2 receive data $[Y1, Y2]$:
$$\begin{bmatrix} Y_1 \\ Y_2 \end{bmatrix} = HH^{-1} \begin{bmatrix} X_1 \\ X_2 \end{bmatrix} = \begin{bmatrix} \alpha_{11}X_1 + \alpha_{12}X_2 \\ \alpha_{22}X_2 + \alpha_{21}X_1 \end{bmatrix}.$$

It should be noted that a decoding capability of the STA is constrained by a signal-to-interference ratio (Signal-to-Interference Ratio, SIR). A larger SIR value indicates a higher probability of correct decoding. The SIR value is mainly determined by accuracy of channel estimation. The STA 1 and the STA 2 perform decoding based on a current SIR. If the decoding succeeds, an ACK is returned. If the decoding fails, no message is returned. If the AP does not receive the ACK after waiting for a specified time, it is considered that the STA fails to be decoded, to be specific, a packet loss occurs.

S18. The AP determines communication quality in an aging time period based on a packet loss rate of the aging time period.

S19. When the communication quality in the aging time period does not reach a communication quality criterion, increase a quantity of channel estimations that need to be performed in a current round of TSCE.

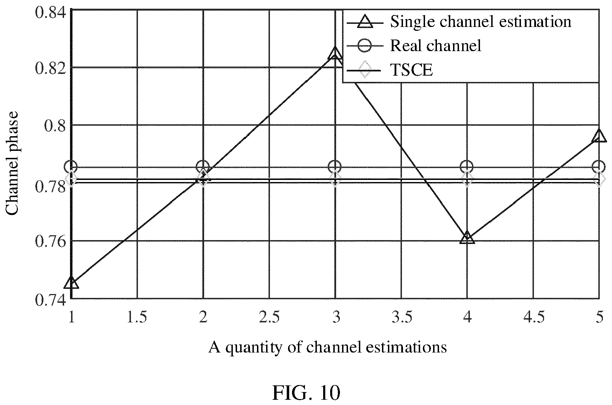

For example, it is assumed that the quantity of channel estimations performed in the current round of TSCE is 5, the AP sets the value of the TSCE field to 00000100, and repeatedly performs S12 to S18. FIG. 9 is a comparison diagram of a channel estimation amplitude and a real channel amplitude that are respectively obtained by single channel estimation and five channel estimations (TSCE). FIG. 10 is a comparison diagram of a channel estimation phase and a real channel phase that are respectively obtained by single channel estimation and five channel estimations (TSCE). Referring to FIG. 9 and FIG. 10, after the quantity of channel estimations performed in each round of TSCE is increased, accuracy of the obtained channel estimation amplitude and phase is significantly improved, thereby improving communication quality.

It should be noted that a sequence of the steps of the channel estimation method provided in this embodiment of this application may be properly adjusted, and a step may be added or removed based on situations. Any variation readily figured out by a person skilled in the art within the technical scope disclosed in this application shall fall within the protection scope of this application, and details are not described herein.

FIG. 11 is a flowchart of another channel estimation method according to an embodiment of this application. The method may be applied to a communications system shown in any one of FIG. 1 to FIG. 3. As shown in FIG. 11, the method includes the following steps.

Step 201: An AP obtains communication quality between the AP and a STA.
Step 202: The AP determines, based on the communication quality, a quantity of channel estimations that need to be performed in a current round of TSCE.

Optionally, for an implementation process of step 201 and step 202, respectively refer to step 101 and step 102. Details are not described herein again in this application.

Step 203: The AP generates a training data packet, where the training data packet includes N groups of training fields.

Optionally, the training data packet is a TSCE-NDP. For an implementation process of this step, refer to step 105. Details are not described herein again in this application.

Optionally, a quantity of training symbols in each group of training fields is the same as a quantity of transmit antennas of the AP.

Step 204: The AP sends an announcement frame to the STA.

The announcement frame is used to instruct the STA to enter a training data packet receiving state, and the announcement frame carries the quantity N of channel estimations that need to be performed in the current round of TSCE.

Optionally, the announcement frame is a time smooth channel estimation-null data packet announcement frame (Time Smooth Channel Estimation-Null Data Packet Announcement, TSCE-NDPA). A TSCE field is set in the TSCE-NDPA, and the TSCE field carries the quantity N of channel estimations.

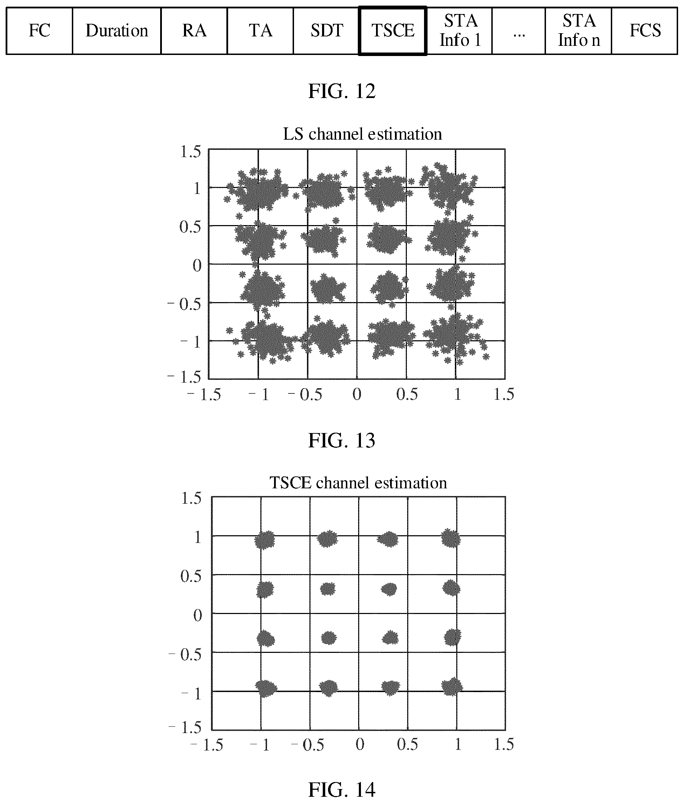

FIG. 12 is a schematic structural diagram of a TSCE-NDPA according to an embodiment of this application. As shown in FIG. 12, the TSCE-NDPA includes a frame control (Frame Control, FC) field, a duration (Duration) field, a receive address (Receiving address, RA) field, a transmit address (Transmit address, TA) field, a sounding dialog token (Sounding Dialog Token, SDT) field, a TSCE field, user information (STA Info 1 to STA Info n) fields, and a frame check (Frame Check, FCS) field. Compared with a conventional HE-NDPA in the 802.11ax standard, in this application, a TSCE field is added between the SDT field and the user information fields to obtain the TSCE-NDPA. For an operation and a function of a field other than the TSCE field in the TSCE-NDPA, refer to the HE-NDPA. Details are not described in this embodiment of this application.

For example, in this embodiment of this application, a length of the TSCE field in the TSCE-NDPA is defined as 8 bits (bits), and a bit value is used to notify the STA of the quantity of channel estimations that need to be performed in the current round of TSCE. Table 2 shows a correspondence between a bit value in the TSCE field and a field description according to an embodiment of this application.

**Table 2**

| TSCE | $N_{TSCE}$ | A quantity of channel estimation repetitions. |
|---|---|---|
| 00000000 | 0 | 1 |
| 00000001 | 1 | 2 |
| 00000010 | 2 | 3 |
| ... | ... | ... |

Referring to Table 2, a quantity of channel estimation repetitions is equal to $N_{TSCE}+1$.

Step 205: The AP sends the training data packet to the STA.
Step 206: The STA separately performs time smooth channel estimation on the N groups of training fields to obtain N channel matrixes.

Optionally, after receiving the training data packet, the STA performs channel estimation based on the quantity of channel estimation repetitions indicated by the TSCE field in a preamble frame (namely, the TSCE-NDPA). For an implementation process of this step, refer to step 107. Details are not described herein again in this application.
Step 207: The STA averages the N channel matrixes to obtain CSI between the AP and the STA.
For an implementation process of this step, refer to step 108. Details are not described herein again in this application.
Step 208: The AP sends a CSI feedback request to the STA.
The CSI feedback request is used to request the STA to report the CSI between the AP and the STA.
Step 209: The STA reports the CSI to the AP.
Further, after obtaining the CSI (the CSI is reflected by an average channel matrix), the AP performs precoding by using the average channel matrix, and performs subsequent data stream transmission. For implementation of this process, refer to a related technology. Details are not described herein.
Optionally, in the communications system provided in this embodiment of this application, step 201 to step 209 may be repeatedly performed. The AP adjusts, in real time based on the communication quality, a quantity of channel estimations that need to be performed in each round of TSCE. By balancing the communication quality, channel estimation complexity, and air interface occupation overheads, time overheads occupied by the air interface are minimized and channel utilization is improved while the communication quality is ensured, thereby improving performance of the communications system.
For example, in this application, the MU-MIMO communications system shown in FIG. 7 is used as an example to describe the foregoing channel estimation method and an implementation process of data stream transmission.

S21. In an initialization phase in which an AP is connected to a STA 1, the AP determines that a quantity of channel estimations that need to be performed in TSCE is 1.
S22. The AP broadcasts a TSCE-NDPA to all STAs, instructs the STA 1 and a STA 2 to enter a training data packet receiving state, and sets a value of a TSCE field in the TSCE-NDPA to 00000000.
S23. After receiving the TSCE-NDPA through an air interface, the STA 1 and the STA 2 separately determine, based on the value of the TSCE field of the TSCE-NDPA, the quantity of channel estimations that need to be performed in the current round of TSCE.
S24. After generating the TSCE-NDP, the AP broadcasts the TSCE-NDP to all the STAs.
S25. The STA 1 performs channel estimation to obtain a first channel vector $H_{STA-1}$, and the STA 2 performs channel estimation to obtain a second channel vector $H_{STA-2}$.
S26. The AP sends a CSI feedback request to the STA 1, and the STA 1 reports the first channel vector $H_{STA-1}$
S27. After receiving the first channel vector $H_{STA-1}$, the AP sends a CSI feedback request to the STA 2, and the STA 1 reports the second channel vector $H_{STA-2}$.
S28. After receiving the second channel vector $H_{STA-2}$, the AP generates a channel estimation matrix $H$, and generates a zero-forcing precoding matrix $H^{-1}$ based on the channel estimation matrix $H$, to send downlink data $[X_1, X_2]$.

For subsequent steps, refer to S17 to S19. Details are not described herein again.
It should be noted that a sequence of the steps of the channel estimation method provided in this embodiment of this application may be properly adjusted, and a step may be added or removed based on situations. Any variation readily figured out by a person skilled in the art within the technical scope disclosed in this application shall fall within the protection scope of this application, and details are not described herein.
In this embodiment of this application, the AP dynamically adjusts a quantity of channel estimations performed in TSCE, to real-time ensure the communication quality and improve accuracy of decoding on a STA side. For example, in this embodiment of this application, 16 QAM modulation and coding is used in the MU-MIMO communications system, and after channel estimation is performed by using a conventional channel estimation method and the channel estimation method provided in this application, decoding accuracy on the STA side is compared by using a constellation diagram, and a more decentralized constellation diagram indicates a higher probability of error decoding. FIG. 13 is a constellation diagram of STA-side decoding after channel estimation is performed by using a conventional LS algorithm. FIG. 14 is a constellation diagram of STA-side decoding after channel estimation is performed by using the channel estimation method provided in this application. As shown in FIG. 13 and FIG. 14, a probability of STA-side error decoding after channel estimation is performed by using the channel estimation method provided in this application is definitely lower than a probability of STA-side error decoding after channel estimation is performed by using the conventional LS algorithm. When 16 QAM modulation and coding is used in the MU-MIMO communications system, an actual test shows that after channel estimation is performed by using the conventional LS algorithm, a packet loss rate reaches 12.6%, and a system signal-to-noise ratio is about 15 decibels; and after channel estimation is performed by using the channel estimation method provided in this application, the packet loss rate is close to 0, and a system signal-to-noise ratio is significantly improved.

In conclusion, according to the channel estimation method provided in this embodiment of this application, the AP determines, based on the communication quality, a quantity of channel estimations that need to be performed in a round of TSCE, and channel estimation is highly flexible. In a communications system having relatively large noise interference, for example, in a Wi-Fi communications network, a plurality of channel estimations are performed on a wireless channel of an air interface in a single round, and channel estimation results are averaged in time sequence. Compared with the LS algorithm, impact of noise on the channel estimation result is greatly reduced, accuracy of channel estimation is improved, reliability of precoding is further improved, and performance of the communications system is improved. In addition, in this application, the AP adjusts, in real time based on the communication quality, the quantity of channel estimations that need to be performed in each round of TSCE. By balancing the communication quality, channel estimation complexity, and air interface occupation overheads, time overheads occupied by the air interface are minimized and channel utilization is improved while the communication quality is ensured.

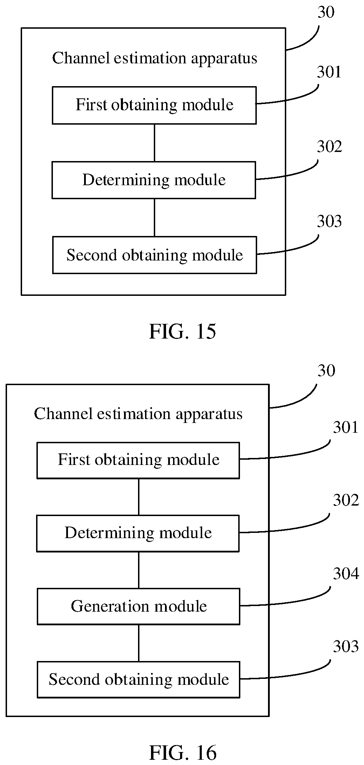

FIG. 15 is a schematic structural diagram of a channel estimation apparatus according to an embodiment of this application, and the channel estimation apparatus is applied to an access point device. As shown in FIG. 15, the apparatus 30 includes:

a first obtaining module 301, configured to obtain communication quality between the AP and a user terminal STA;
a determining module 302, configured to determine, based on the communication quality, a quantity of channel estimations that need to be performed in a current round of time smooth channel estimation TSCE; and
a second obtaining module 303, configured to obtain channel state information CSI between the AP and the STA, where the CSI is determined by a channel estimation device based on a channel estimation result obtained after the current round of TSCE is performed based on the determined quantity of channel estimations.

Optionally, the first obtaining module is configured to:
determine the communication quality between the AP and the STA based on communication posterior information between the AP and the STA in an aging time period, where the aging time period is an interval time period of two adjacent rounds of TSCE, and the communication posterior information includes at least one of a packet loss rate and a throughput.

Optionally, the determining module is configured to:
when communication quality in a previous aging time period does not reach a communication quality criterion, increase the quantity of channel estimations that need to be performed in the current round of TSCE.

Further, when the communication quality in the previous aging time period does not reach the communication quality criterion, the determining module is further configured to:
reset a quantity of qualification times of communication quality to zero, where the quantity of qualification times indicates a quantity of times that the communication quality reaches the communication quality criterion in a continuous aging time period.

Optionally, the determining module is configured to:
when communication quality in a previous aging time period reaches a communication quality criterion, increase the quantity of qualification times of communication quality by 1 to obtain an updated quantity of qualification times, where the quantity of qualification times indicates a quantity of times that the communication quality reaches the communication quality criterion in a continuous aging time period; and when the updated quantity of qualification times reaches a criterion of the quantity of qualification times, reduce the quantity of channel estimations that need to be performed in the current round of TSCE, and reset the quantity of qualification times of communication quality to zero.

Optionally, the determining module is configured to:
when communication quality in a previous aging time period reaches a communication quality criterion, increase a quantity of qualification times of communication quality by 1 to obtain an updated quantity of qualification times, where the quantity of qualification times indicates a quantity of times that the communication quality reaches the communication quality criterion in a continuous aging time period; and when the updated quantity of qualification times does not reach a criterion of the quantity of qualification times, determine that the quantity of channel estimations that need to be performed in the current round of TSCE is the same as a quantity of channel estimations performed in a previous round of TSCE.

Optionally, the quantity of channel estimations that need to be performed in the current round of TSCE is N, N is a positive integer, and the channel estimation device is the AP.

The second obtaining module is configured to:

send a trigger frame to the STA, where the trigger frame carries the quantity N of channel estimations that need to be performed in the current round of TSCE; receive a training data packet sent by the STA, where the training data packet is generated by the STA based on the trigger frame, and the training data packet includes N groups of training fields; separately perform channel estimation on the N groups of training fields to obtain N channel matrixes; and average the N channel matrixes to obtain the CSI between the AP and the STA.

Correspondingly, as shown in FIG. 16, the apparatus 30 further includes:

a generation module 304, configured to generate the trigger frame based on a quantity of transmit antennas of the STA, where the trigger frame carries a quantity of training symbols in each group of training fields, and the quantity of training symbols in each group of training fields is the same as the quantity of transmit antennas of the STA.

Optionally, the training data packet is a time smooth channel estimation-null data packet TSCE-NDP, and the TSCE-NDP includes N repeated groups of training fields.

Optionally, the quantity of channel estimations that need to be performed in the current round of TSCE is N, N is a positive integer, and the channel estimation device is the STA.

The second obtaining module is configured to:

generate a training data packet, where the training data packet includes N groups of training fields; send the training data packet to the STA; send a CSI feedback request to the STA, where the CSI feedback request is used to request the STA to report the CSI between the AP and the STA, and the CSI is obtained after the STA averages N channel matrixes after separately performing channel estimation on the N groups of training fields to obtain the N channel estimation matrixes; and receive the CSI reported by the STA.

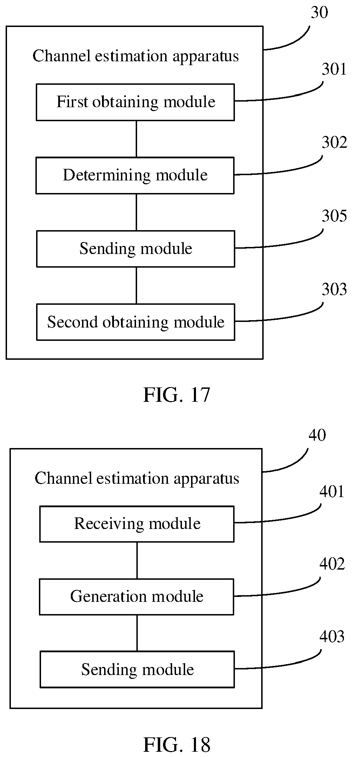

Correspondingly, as shown in FIG. 17, the apparatus 30 further includes:

a sending module 305, configured to send an announcement frame to the STA, where the announcement frame is used to instruct the STA to enter a training data packet receiving state, and the announcement frame carries the quantity N of channel estimations that need to be performed in the current round of TSCE.

Optionally, the announcement frame is a time smooth channel estimation-null data packet announcement frame TSCE-NDPA, a TSCE field is set in the TSCE-NDPA, and the TSCE field carries the quantity N of channel estimations.

In conclusion, according to the channel estimation apparatus provided in this embodiment of this application, the AP determines, based on the communication quality, a quantity of channel estimations that need to be performed in a round of TSCE, and channel estimation is highly flexible. In a communications system having relatively large noise interference, for example, in a Wi-Fi communications network, a plurality of channel estimations are performed on a wireless channel of an air interface in a single round, and channel estimation results are averaged in time sequence. Compared with an LS algorithm, impact of noise on a channel estimation result is greatly reduced, accuracy of channel estimation is improved, reliability of precoding is further improved, and performance of the communications system is improved. In addition, in this application, the AP adjusts, in real time based on the communication quality, a quantity of channel estimations that need to be performed in each round of TSCE. By balancing the communication quality, channel estimation complexity, and air interface occupation overheads, time overheads occupied by the air interface are minimized and channel utilization is improved while the communication quality is ensured.

FIG. 18 is a schematic structural diagram of a channel estimation apparatus according to another embodiment of this application, and the channel estimation apparatus is applied to a user terminal. As shown in FIG. 18, the apparatus 40 includes:

a receiving module 401, configured to receive a trigger frame sent by an access point device AP, where the trigger frame carries a quantity N of channel estimations that need to be performed in a current round of time smooth channel estimation TSCE, and N is a positive integer;

a generation module 402, configured to generate a training data packet based on the trigger frame, where the training data packet includes N groups of training fields; and

a sending module 403, configured to send the training data packet to the AP.

Optionally, the trigger frame carries a quantity of training symbols in each group of training fields, and the quantity of training symbols in each group of training fields is the same as a quantity of transmit antennas of the STA.

The generation module is configured to:

generate a target mapping matrix based on the quantity of training symbols in each group of training fields and the quantity N of channel estimations that need to be performed in the current round of TSCE; and perform mapping on the training symbols by using the target mapping matrix, to obtain the N groups of training fields.

In conclusion, according to the channel estimation apparatus provided in this embodiment of this application, after the receiving module receives the trigger frame sent by the AP, the user terminal generates the training data packet by using the generation module, and the quantity of channel estimations carried in the trigger frame is determined by the AP based on the communication quality, and channel estimation is highly flexible. In a communications system having relatively large noise interference, for example, in a Wi-Fi communications network, a plurality of channel estimations are performed on a wireless channel of an air interface in a single round, and channel estimation results are averaged in time sequence. Compared with an LS algorithm, impact of noise on a channel estimation result is greatly reduced, accuracy of channel estimation is improved, reliability of precoding is further improved, and performance of the communications system is improved. In addition, in this application, the AP adjusts, in real time based on the communication quality, a quantity of channel estimations that need to be performed in each round of TSCE. By balancing the communication quality, channel estimation complexity, and air interface occupation overheads, time overheads occupied by the air interface are minimized and channel utilization is improved while the communication quality is ensured.

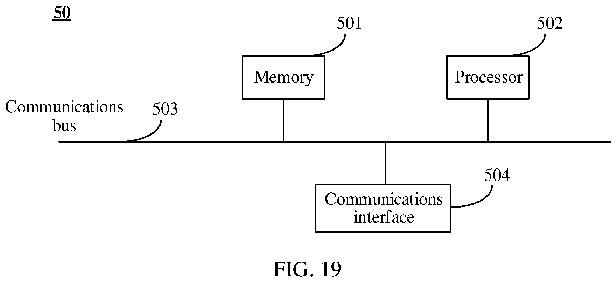

An embodiment of this application provides a channel estimation apparatus, and is configured for an access point device. As shown in FIG. 19, the apparatus includes a memory 501, a processor 502, and a computer program that is stored in the memory 501 and can be run on the processor 502. When the processor 502 executes the computer program, the channel estimation method in the method embodiments of this application is implemented.

Optionally, the apparatus 50 further includes a communications bus 503 and a communications interface 504.

The processor 502 includes one or more processing cores. The processor 502 performs various function applications and data processing by running a computer program and a unit.

The memory 501 may be configured to store a computer program and a unit. Specifically, the memory may store an operating system and an application program unit required for at least one function. The operating system may be an operating system such as a real-time operating system (Real Time eXecutive, RTX), LINUX, UNIX, WINDOWS, or OS X.

There may be a plurality of communications interfaces 504, and the communications interface 504 is configured to communicate with another storage device or network device. For example, in this embodiment of this application, the communications interface 504 may be configured to receive an alarm log sent by a network device in a communications network.

The memory 501 and the communications interface 504 are separately connected to the processor 502 by using the communications bus 503.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the conception and principle of this application should fall within the protection scope of this application.

## Claims

1. A channel estimation method, applied to an access point device AP, wherein the method comprises:

   obtaining communication quality between the AP and a user terminal STA;
   determining, based on the communication quality, a quantity of channel estimations that need to be performed in a current round of time smooth channel estimation TSCE; and
   obtaining channel state information CSI between the AP and the STA, wherein the CSI is determined by a channel estimation device based on a channel estimation result obtained after the current round of TSCE is performed based on the determined quantity of channel estimations.

2. The method according to claim 1, wherein the obtaining communication quality between the AP and a user terminal STA comprises:
   determining the communication quality between the AP and the STA based on communication posterior information between the AP and the STA in an aging time period, wherein the aging time period is an interval time period of two adjacent rounds of TSCE, and the communication posterior information comprises at least one of a packet loss rate and a throughput.

3. The method according to claim 2, wherein the determining, based on the communication quality, a quantity of channel estimations that need to be performed in a current round of time smooth channel estimation TSCE comprises:
   when communication quality in a previous aging time period does not reach a communication quality criterion, increasing the quantity of channel estimations that need to be performed in the current round of TSCE.

4. The method according to claim 3, wherein when the communication quality in the previous aging time period does not reach the communication quality criterion, the method further comprises:
resetting a quantity of qualification times of the communication quality to zero, wherein the quantity of qualification times indicates a quantity of times that the communication quality reaches the communication quality criterion in a continuous aging time period.

5. The method according to claim 2, wherein the determining, based on the communication quality, a quantity of channel estimations that need to be performed in a current round of time smooth channel estimation TSCE comprises:

when communication quality in a previous aging time period reaches a communication quality criterion, increasing a quantity of qualification times of communication quality by 1 to obtain an updated quantity of qualification times, wherein the quantity of qualification times indicates a quantity of times that the communication quality reaches the communication quality criterion in a continuous aging time period; and
when the updated quantity of qualification times reaches a criterion of the quantity of qualification times, reducing the quantity of channel estimations that need to be performed in the current round of TSCE, and resetting the quantity of qualification times of communication quality to zero.

6. The method according to claim 2, wherein the determining, based on the communication quality, a quantity of channel estimations that need to be performed in a current round of time smooth channel estimation TSCE comprises:

when communication quality in a previous aging time period reaches a communication quality criterion, increasing a quantity of qualification times of communication quality by 1 to obtain an updated quantity of qualification times, wherein the quantity of qualification times indicates a quantity of times that the communication quality reaches the communication quality criterion in a continuous aging time period; and
when the updated quantity of qualification times does not reach a criterion of the quantity of qualification times, determining that the quantity of channel estimations that need to be performed in the current round of TSCE is the same as a quantity of channel estimations performed in a previous round of TSCE.

7. The method according to any one of claims 1 to 6, wherein the quantity of channel estimations that need to be performed in the current round of TSCE is N, N is a positive integer, and the channel estimation device is the AP; and the obtaining channel state information CSI between the AP and the STA comprises:

sending a trigger frame to the STA, wherein the trigger frame carries the quantity N of channel estimations that need to be performed in the current round of TSCE;
receiving a training data packet sent by the STA, wherein the training data packet is generated by the STA based on the trigger frame, and the training data packet comprises N groups of training fields;
separately performing channel estimation on the N groups of training fields to obtain N channel matrixes; and
averaging the N channel matrixes to obtain the CSI between the AP and the STA.

8. The method according to claim 7, wherein the method further comprises:
generating the trigger frame based on a quantity of transmit antennas of the STA, wherein the trigger frame carries a quantity of training symbols in each group of training fields, and the quantity of training symbols in each group of training fields is the same as the quantity of transmit antennas of the STA.

9. The method according to claim 7, wherein
the training data packet is a time smooth channel estimation-null data packet TSCE-NDP, and the TSCE-NDP comprises N repeated groups of training fields.

10. The method according to any one of claims 1 to 6, wherein the quantity of channel estimations that need to be performed in the current round of TSCE is N, N is a positive integer, and the channel estimation device is the STA; and the obtaining channel state information CSI between the AP and the STA comprises:

generating a training data packet, wherein the training data packet comprises N groups of training fields;
sending the training data packet to the STA;
sending a CSI feedback request to the STA, wherein the CSI feedback request is used to request the STA to report the CSI between the AP and the STA, and the CSI is obtained after the STA averages N channel matrixes after separately performing channel estimation on the N groups of training fields to obtain the N channel estimation matrixes; and
receiving the CSI reported by the STA.

**11.** The method according to claim 10, wherein before the sending the training data packet to the STA, the method further comprises:

sending an announcement frame to the STA, wherein the announcement frame is used to instruct the STA to enter a training data packet receiving state, and the announcement frame carries the quantity N of channel estimations that need to be performed in the current round of TSCE.

**12.** The method according to claim 11, wherein
the announcement frame is a time smooth channel estimation-null data packet announcement frame TSCE-NDPA, a TSCE field is set in the TSCE-NDPA, and the TSCE field carries the quantity N of channel estimations.

**13.** A channel estimation method, applied to a user terminal STA, wherein the method comprises:

receiving a trigger frame sent by an access point device AP, wherein the trigger frame carries a quantity N of channel estimations that need to be performed in a current round of time smooth channel estimation TSCE, and N is a positive integer;
generating a training data packet based on the trigger frame, wherein the training data packet comprises N groups of training fields; and
sending the training data packet to the AP.

**14.** The method according to claim 13, wherein the trigger frame carries a quantity of training symbols in each group of training fields, and the quantity of training symbols in each group of training fields is the same as a quantity of transmit antennas of the STA; and
the generating a training data packet based on the trigger frame comprises:

generating a target mapping matrix based on the quantity of training symbols in each group of training fields and the quantity N of channel estimations that need to be performed in the current round of TSCE; and
performing mapping on the training symbols by using the target mapping matrix, to obtain the N groups of training fields.

**15.** A channel estimation apparatus, applied to an access point device AP, wherein the apparatus comprises:

a first obtaining module, configured to obtain communication quality between the AP and a user terminal STA;
a determining module, configured to determine, based on the communication quality, a quantity of channel estimations that need to be performed in a current round of time smooth channel estimation TSCE; and
a second obtaining module, configured to obtain channel state information CSI between the AP and the STA, wherein the CSI is determined by a channel estimation device based on a channel estimation result obtained after the current round of TSCE is performed based on the determined quantity of channel estimations.

**16.** The apparatus according to claim 15, wherein the first obtaining module is configured to:
determine the communication quality between the AP and the STA based on communication posterior information between the AP and the STA in an aging time period, wherein the aging time period is an interval time period of two adjacent rounds of TSCE, and the communication posterior information comprises at least one of a packet loss rate and a throughput.

**17.** The apparatus according to claim 16, wherein the determining module is configured to:
when communication quality in a previous aging time period does not reach a communication quality criterion, increase the quantity of channel estimations that need to be performed in the current round of TSCE.

**18.** The apparatus according to claim 17, wherein when the communication quality in the previous aging time period does not reach the communication quality criterion, the determining module is further configured to:
reset a quantity of qualification times of the communication quality to zero, wherein the quantity of qualification times indicates a quantity of times that the communication quality reaches the communication quality criterion in a continuous aging time period.

**19.** The apparatus according to claim 16, wherein the determining module is configured to:

when communication quality in a previous aging time period reaches a communication quality criterion, increase a quantity of qualification times of communication quality by 1 to obtain an updated quantity of qualification times, wherein the quantity of qualification times indicates a quantity of times that the communication quality reaches the communication quality criterion in a continuous aging time period; and

when the updated quantity of qualification times reaches a criterion of the quantity of qualification times, reduce the quantity of channel estimations that need to be performed in the current round of TSCE, and reset the quantity of qualification times of communication quality to zero.

20. The apparatus according to claim 16, wherein the determining module is configured to:

when communication quality in a previous aging time period reaches a communication quality criterion, increase a quantity of qualification times of communication quality by 1 to obtain an updated quantity of qualification times, wherein the quantity of qualification times indicates a quantity of times that the communication quality reaches the communication quality criterion in a continuous aging time period; and

when the updated quantity of qualification times does not reach a criterion of the quantity of qualification times, determine that the quantity of channel estimations that need to be performed in the current round of TSCE is the same as a quantity of channel estimations performed in a previous round of TSCE.

21. The apparatus according to any one of claims 15 to 20, wherein the quantity of channel estimations that need to be performed in the current round of TSCE is N, N is a positive integer, and the channel estimation device is the AP; and the second obtaining module is configured to:

send a trigger frame to the STA, wherein the trigger frame carries the quantity N of channel estimations that need to be performed in the current round of TSCE;

receive a training data packet sent by the STA, wherein the training data packet is generated by the STA based on the trigger frame, and the training data packet comprises N groups of training fields;

separately perform channel estimation on the N groups of training fields to obtain N channel matrixes; and

average the N channel matrixes to obtain the CSI between the AP and the STA.

22. The apparatus according to claim 21, wherein the apparatus further comprises:
a generation module, configured to generate the trigger frame based on a quantity of transmit antennas of the STA, wherein the trigger frame carries a quantity of training symbols in each group of training fields, and the quantity of training symbols in each group of training fields is the same as the quantity of transmit antennas of the STA.

23. The apparatus according to claim 21, wherein
the training data packet is a time smooth channel estimation-null data packet TSCE-NDP, and the TSCE-NDP comprises N repeated groups of training fields.

24. The apparatus according to any one of claims 15 to 20, wherein the quantity of channel estimations that need to be performed in the current round of TSCE is N, N is a positive integer, and the channel estimation device is the STA; and the second obtaining module is configured to:

generate a training data packet, wherein the training data packet comprises N groups of training fields;

send the training data packet to the STA;

send a CSI feedback request to the STA, wherein the CSI feedback request is used to request the STA to report the CSI between the AP and the STA, and the CSI is obtained after the STA averages N channel matrixes after separately performing channel estimation on the N groups of training fields to obtain the N channel estimation matrixes; and

receive the CSI reported by the STA.

25. The apparatus according to claim 24, wherein the apparatus further comprises:
a sending module, configured to send an announcement frame to the STA, wherein the announcement frame is used to instruct the STA to enter a training data packet receiving state, and the announcement frame carries the quantity N of channel estimations that need to be performed in the current round of TSCE.

26. The apparatus according to claim 25, wherein
the announcement frame is a time smooth channel estimation-null data packet announcement frame TSCE-NDPA, a TSCE field is set in the TSCE-NDPA, and the TSCE field carries the quantity N of channel estimations.

27. A channel estimation apparatus, applied to a user terminal STA, wherein the apparatus comprises:

a receiving module, configured to receive a trigger frame sent by an access point device AP, wherein the trigger frame carries a quantity N of channel estimations that need to be performed in a current round of time smooth channel estimation TSCE, and N is a positive integer;
a generation module, configured to generate a training data packet based on the trigger frame, wherein the training data packet comprises N groups of training fields; and
a sending module, configured to send the training data packet to the AP.

28. The apparatus according to claim 27, wherein the trigger frame carries a quantity of training symbols in each group of training fields, and the quantity of training symbols in each group of training fields is the same as a quantity of transmit antennas of the STA; and
the generation module is configured to:

generate a target mapping matrix based on the quantity of training symbols in each group of training fields and the quantity N of channel estimations that need to be performed in the current round of TSCE; and
perform mapping on the training symbols by using the target mapping matrix, to obtain the N groups of training fields.

29. A channel estimation apparatus, applied to an access point device AP, comprising a memory, a processor, and a computer program that is stored in the memory and that can be run on the processor, and when the processor executes the computer program, the channel estimation method according to any one of claims 1 to 12 is implemented.

30. A communications system, comprising: an access point AP and a user terminal STA, wherein
the AP comprises the channel estimation apparatus according to any one of claims 15 to 26.

EP 3 806 344 A1

FIG. 1

FIG. 2

22

FIG. 3

```
┌──────┐                                              ┌──────┐
│  AP  │                                              │ STA  │
└──────┘                                              └──────┘
```

101. Obtain communication quality between the AP and the STA

102. Determine, based on the communication quality, a quantity of channel estimations that need to be performed in a current round of TSCE

103. Generate a trigger frame based on a quantity of transmit antennas of the STA

104. Send the trigger frame

105. Generate a training data packet based on the trigger frame, where the training data packet includes N groups of training fields

106. Send the training data packet

107. Separately perform channel estimation on the N groups of training fields to obtain N channel matrixes

108. Average the N channel matrixes to obtain CSI between the AP and the STA

FIG. 4

FIG. 5

| Preamble part | HE-SIG | HE-STF | HE-LTF | ... | HE-LTF | HE-LTF | ... | HE-LTF | ... | HE-LTF | ... | HE-LTF |

A first group of training fields

A second group of training fields

An N$^{th}$ group of training fields

n

Training part

FIG. 6

FIG. 7

| Preamble part | HE-SIG | HE-STF | HE-LTF |
|---|---|---|---|

FIG. 8

FIG. 9

FIG. 10

FIG. 11

| FC | Duration | RA | TA | SDT | TSCE | STA Info 1 | ... | STA Info n | FCS |
|---|---|---|---|---|---|---|---|---|---|

FIG. 12

LS channel estimation

FIG. 13

TSCE channel estimation

FIG. 14

30

Channel estimation apparatus

301

First obtaining module

302

Determining module

303

Second obtaining module

FIG. 15

30

Channel estimation apparatus

301

First obtaining module

302

Determining module

304

Generation module

303

Second obtaining module

FIG. 16

30

Channel estimation apparatus

301

First obtaining module

302

Determining module

305

Sending module

303

Second obtaining module

FIG. 17

40

Channel estimation apparatus

401

Receiving module

402

Generation module

403

Sending module

FIG. 18

<u>**50**</u>

501

502

Memory

Processor

Communications
bus 503

504

Communications
interface

FIG. 19

## INTERNATIONAL SEARCH REPORT

| International application No. |
| --- |
| **PCT/CN2019/092022** |

**A. CLASSIFICATION OF SUBJECT MATTER**

H04B 7/0413(2017.01)i

According to International Patent Classification (IPC) or to both national classification and IPC

**B. FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; IEEE: 信道, 质量, 估计, 测量, 计算, 检测, 监测, 测试, 次数, 触发帧, 序列, CSI, channel, quality, estimat+, comput+, measur+, number, trigger, frame, sequence, TSCE

**C. DOCUMENTS CONSIDERED TO BE RELEVANT**

| Category* | Citation of document, with indication, where appropriate, of the relevant passages | Relevant to claim No. |
| --- | --- | --- |
| A | CN 105245261 A (SHANGHAI HUAWEI TECHNOLOGIES CO., LTD.) 13 January 2016 (2016-01-13) abstract, description, paragraphs 244-269, and figure 6 | 1-30 |
| A | CN 107027145 A (HUAWEI TECHNOLOGIES CO., LTD.) 08 August 2017 (2017-08-08) description, paragraphs 71 and 183-186, and figure 12 | 1-30 |
| A | US 2012002742 A1 (CHENG, J. F.) 05 January 2012 (2012-01-05) entire document | 1-30 |
| A | CN 101567716 A (HUAZHONG UNIVERSITY OF SCIENCE AND TECHNOLOGY) 28 October 2009 (2009-10-28) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2019** | **11 September 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

Form PCT/ISA/210 (patent family annex) (January 2015)

| INTERNATIONAL SEARCH REPORT<br>Information on patent family members | | | | International application No.<br>**PCT/CN2019/092022** | | | |
|---|---|---|---|---|---|---|---|
| Patent document<br>cited in search report | | | Publication date<br>(day/month/year) | Patent family member(s) | | | Publication date<br>(day/month/year) |
| CN | 105245261 | A | 13 January 2016 | CN | 105245261 | B | 21 May 2019 |
| CN | 107027145 | A | 08 August 2017 | EP | 3404955 | A1 | 21 November 2018 |
| | | | | EP | 3404955 | A4 | 21 November 2018 |
| | | | | US | 2018343580 | A1 | 29 November 2018 |
| | | | | WO | 2017133420 | A1 | 10 August 2017 |
| US | 2012002742 | A1 | 05 January 2012 | EP | 2589192 | A1 | 08 May 2013 |
| | | | | US | 8532214 | B2 | 10 September 2013 |
| | | | | EP | 2589192 | B1 | 09 August 2017 |
| | | | | CN | 103069759 | B | 17 August 2016 |
| | | | | US | 9148803 | B2 | 29 September 2015 |
| | | | | CN | 103069759 | A | 24 April 2013 |
| | | | | US | 2013322283 | A1 | 05 December 2013 |
| | | | | WO | 2012001591 | A1 | 05 January 2012 |
| CN | 101567716 | A | 28 October 2009 | CN | 101567716 | B | 04 July 2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810652577